# EUROPEAN PATENT APPLICATION

(11) **EP 1 739 568 A1**
(43) Date of publication of application: **03.01.2007**
(21) Application number: 06115057.9
(22) Date of filing: 07.06.2006
(51) Int. Cl.: G06F 13/36, G06F 13/40

(54) **Information processing apparatus and method of controlling the same**

(30) Priority: 30.06.2005 JP 2005192692
(71) Applicant: KABUSHIKI KAISHA TOSHIBA, Tokyo 105-8001 (JP)
(72) Inventor: Kinoshita, Tadaaki Toshiba Corporation, Tokyo 105-8001 (JP)
(74) Representative: Henkel, Feiler & Hänzel

(57) **Abstract**

An information processing apparatus (10) including a memory device (11) which sets, in a case where the information processing apparatus (10) transmits the packet to the slave device (12), and receive the packet output from the slave device, a start timing of an open drain output period in which communication is carried out in an open drain mode, and stores data indicating the start timing of the open drain output period, the open drain mode output period being set as an output mode in which each of the packets is output to the bus (104), and a switching device (11) which switches the output mode to the open drain mode, at the start timing of the open drain output period, and receive the packet output from the slave device (12).

## Description

The present invention relates to an information processing apparatus such as a computer, and a method of controlling the operation of the information processing apparatus.

In recent multimedia card systems for use in information processing apparatuses such as computers, the relationship between a command and a response is defined by a protocol such that the command and the response are not output at the same timing. In such a system, in the case where a memory card connected to a computer serving as a host is formed to additionally have a function of outputting a packet corresponding to a response packet, regardless of outputting of a command packet from the host, there is a possibility that the command packet from the host and the response packet from the memory card may be output at the same timing. In the system, the command packet and the response packet output at the same timing are transmitted in a push-pull output method (as disclosed in the literature "MultiMedia Card System Specification").

In the above technique, since the packets from the host and the memory card, which are output at the same timing, are transmitted in the push-pull output method as described above, it cannot be easily detected that the packets are output at the same timing.

The present invention has been made in consideration of the above circumstances, and its object is to provide an information processing apparatus and a method of controlling the same, which facilitate detection of outputting of packets at the same timing, and can control preference use of a bus after outputting of the packets at the same timing.

In order to attain the above object, according to an aspect of the present invention, there is provided An information processing apparatus capable of transmitting a packet to a slave device through a bus, and receiving a packet output from the slave device through the bus, in synchronism with a clock, the information processing apparatus comprising: a memory device which sets, in a case where the information processing apparatus transmits the packet to the slave device, and receive the packet output from the slave device, a start timing of an open drain output period in which communication is carried out in an open drain mode, and stores data indicating the start timing of the open drain output period, the open drain mode output period being set as an output mode in which each of the packets is output to the bus; and a switching device which switches the output mode to the open drain mode, at the start timing of the open drain output period, which is indicated by the data stored in the memory device, after the information processing apparatus starts to transmit the packet to the slave device, and receive the packet output from the slave device.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a view showing the system configuration of an information processing apparatus according to a first embodiment of the present invention.
FIG. 2 is a block diagram of a structure in which a slave device is connected to a host apparatus.
FIG. 3 is a schematic diagram of an example of a data packet.
FIG. 4 is a schematic diagram of an example of a data packet for use in a multi-slave system (where a plurality of slave devices are connected to a single host apparatus).
FIG. 5 is a block diagram of the structure of an interface control device of the host apparatus.
FIG. 6 is a block diagram of the structure of an interface control device of the slave device.
FIG. 7 is a flowchart of a method of controlling the information processing apparatus.
FIG. 8 is a schematic diagram of an example of a protocol for data communication.
FIG. 9 is a schematic diagram of an example of a protocol for data communication which is carried out in accordance with a bus clock signal the clock frequency of which is appropriately changed when the output period is changed to an OD output period.
FIG. 10 is a schematic diagram showing the PP output period and the OD output period which are set based on a predetermined signal, for data communication between the host apparatus and the slave device.

An embodiment of the present invention will be explained with reference to the accompanying drawings.

### (First embodiment)

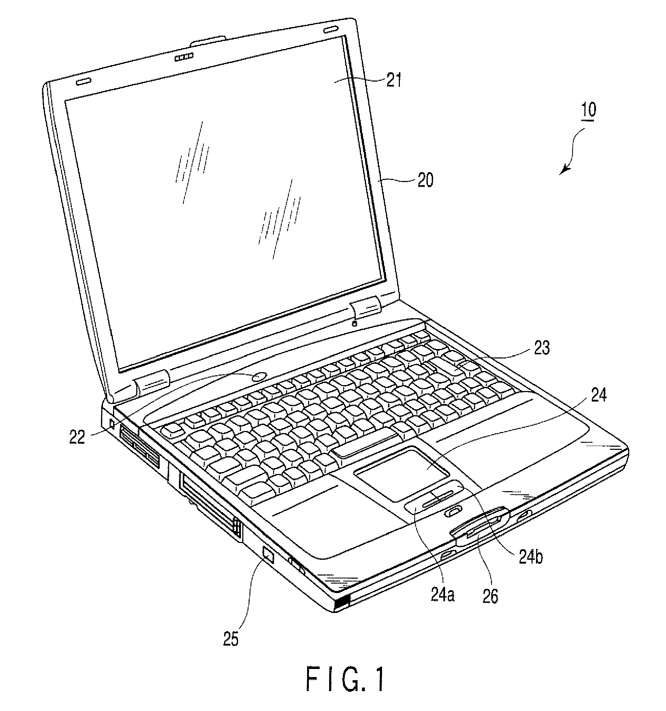

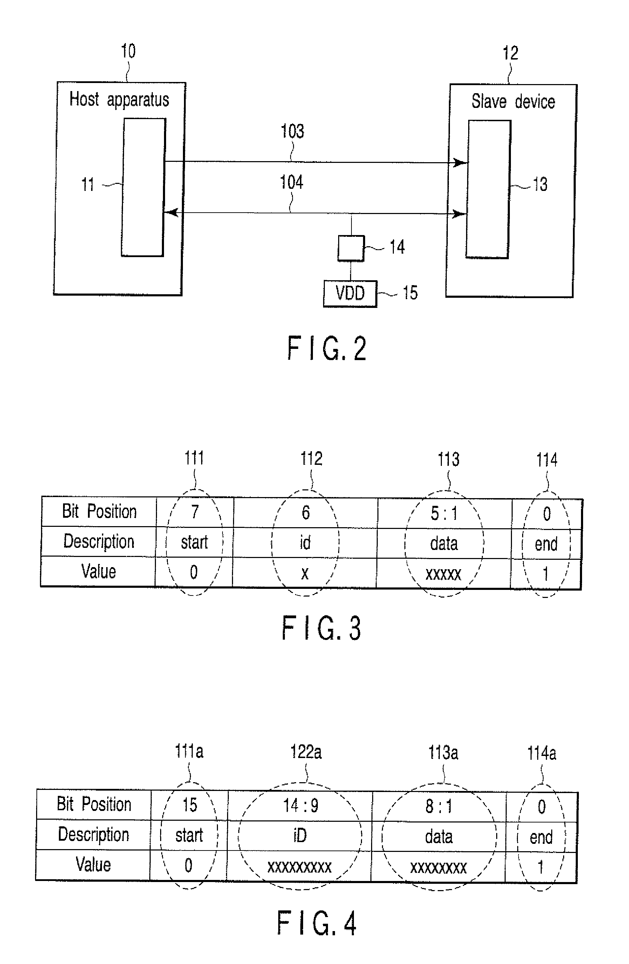

FIG. 1 is a view showing the system configuration of an information processing apparatus according to a first embodiment of the present invention. The information processing apparatus is provided as a notebook computer (which will be hereinafter referred to as a host apparatus) 10 which can be driven by a battery.

As shown in FIG. 1, the host apparatus 10 comprises a computer body and a display unit 20. The display unit 20 incorporates a display device comprising a liquid crystal display (LCD). A display screen 21 of the LCD is located at substantially the center of the display unit 20.

The display unit 20 is attached to the host apparatus 10, and is rotatable between its open position and its closed position. The body of the host apparatus 10 has a thin box-shaped housing. On an upper surface of the housing, a power button 22, a keyboard 23, a touch pad 24, left and right buttons 24a and 24b, an internal DVD-ROM drive 25 and a card reader 26, etc., are arranged. The touch pad 24 and the left and right buttons 24a and 24b are located on a palm rest.

It should be noted that the card reader 26 enables a memory card such as a flash memory to be read in data by the host apparatus 10, after the memory card is loaded into the card reader 26, and the card reader 26 accommodating the card reader loaded thereinto will be hereinafter referred to as a slave device. Also, the memory card itself can be defined as a slave device. It should also be noted that the slave the slave device is incorporated in the host apparatus 10; however, it can be provided as an external device connectable to the host apparatus 10.

FIG. 2 is a block diagram of a structure in which a slave device 12 is connected to the host apparatus 10.

The host apparatus includes an interface control device 11. Also, the slave device 12 includes an interface control device 13.

The interface control device 11 of the host apparatus 10 sends a clock signal (bus clock) 103 to the interface control device 13 of the slave device 12. The interface control device 11 of the host apparatus 10 and the interface control device 13 of the slave device 12 are connected to each other by a data bus 104, and a data packet is transmitted in synchronism with the clock signal 103, between the interface control device 11 of the host apparatus 10 and the interface control device 13 of the slave device 12. It should be noted that suppose the data bus 104 is pulled up to an appropriate voltage (power supply voltage VDD 15) through a resistor 14.

FIG. 3 is a schematic diagram of an example of the above data packet.

The data packet comprises 8-bit data (having bit positions 7 to 0) as described as follows:

A first bit 111 indicates the start of the data packet (Description:start), and its bit position is 7. A second bit 112 indicates identifiers of the host and slave (Description:id), and its bit position is 6. Third to seventh bits indicate data fields (Description:data), and their bit positions are 5 to 1, respectively. An eighth bit indicates the end of the packet, and its bit position is 0.

FIG. 4 is a schematic diagram of an example of a data packet for use in a multi-slave system (where a plurality of slave devices are connected to a single host apparatus).

The data packet comprises 16-bit data (having bit positions 15 to 0) as described as follows:

A first bit 111a indicates the start of the data packet (Description:start), and its bit position is 15. Second to eighth bits 112a indicate identifiers of the host and slave (Description:id), and their bit positions are 14 to 9, respectively. Ninth to fifteenth bits indicate data fields (Description:data), and their bit positions are 8 to 1, respectively. A sixteenth bit indicates the end of the packet (Description:end), and its bit position is 0.

The embodiment will be further explained by referring to the case where the host apparatus and the slave device are connected to each other as shown in FIGS. 2 and 3, i.e., a single slave device is connected to a single host apparatus. However, the embodiment can be also applied to the multi-slave system by using the data packet, etc., shown in FIG. 4.

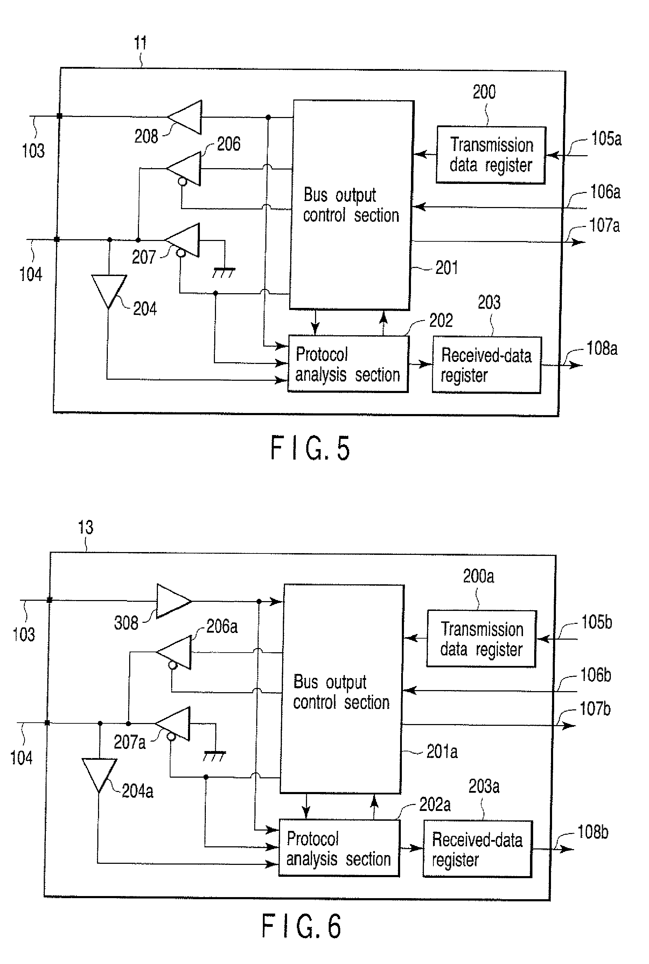

FIG. 5 is a block diagram of the interface control device 11 of the host apparatus 10.

The interface control device 11 of the host apparatus 10 has the following structure:

The interface control device 11 comprises a transmission data register 200, a bus output control section 201, a protocol analysis section 202, a received-data register 203, an input receiver 204, a PP output driver 206, an OD output driver 207 and an output driver 208. To the transmission data register 200, packet data 105a to be transmitted is written. When receiving the packet data 105a from the transmission data register 200, the bus output control section 201 transmits the packet data 105a to the data bus 104 in synchronism with the clock signal 103 by using a push-pull output driver (hereinafter referred to as a PP output) or an open drain output driver (hereinafter referred to as an OD output) in response to a packet output instruction signal 106a from a central processing unit (CPU) or the like provided in the host apparatus 10. The protocol analysis section 202 analyzes a data differential signal to obtain data, and outputs the data to the bus output control section 201. The received-data register 203 receives and stores the data output from the protocol analysis section 202, and then outputs the data to packet data 108a. The output driver 208 transmits the packet data to the data bus 104 in synchronism with the clock signal 103.

When the packet data 105a to be transmitted is written to the transmission data register 200, the bus output control section 201 transmits the packet data to the data bus 104 in synchronism with the clock signal 103, which is output from the output driver 208, by using an arbitrary one of the PP output driver 206 and the OD output driver 207. Furthermore, the bus output control section 201 outputs an OD output signal to the protocol analysis section 202 in an OD output period. Furthermore, the bus output control section 201 stops transmission of the packet data, when receiving the data differential signal from the protocol analysis section 202.

The protocol analysis section 202 analyzes the data from the input receiver 204 in synchronism with the clock signal 103. Also, the protocol analysis section 202 identifies the data packet transmitted via the data bus 104, and stores the identified data packet in the received-data register 203. The stored packet data is sent to the host apparatus 10 as packet data 108.

Furthermore, in the case where the OD output signal is output from the bus output control section 201, the protocol analysis section 202 outputs, to the bus output control section 201, a data differential signal indicating the comparison between an assumed signal level of a signal on the data bus 104, which is output from the OD output driver 207 controlled by the bus output control section 201, and the signal level of the signal from the input receiver 204.

FIG. 6 is a block diagram of the structure of the interface control device 13 of the slave device 12.

The interface control device 13 of the slave device 12 has the following structure:

The interface control device 13 comprises a transmission data register 200a, a bus output control section 201a, a protocol analysis section 202a, a received-data register 203a, an input receiver 204a, a PP output driver 206a, an OD output driver 207a and an output driver 308. To the transmission data register 200a, packet data 105b to be transmitted is written. When receiving the packet data 105b from the transmission data register 200a, the bus output control section 201a transmits, in response to a packet output instruction signal 106b from the MPU or the like provided in the slave device 12, the packet data to the data bus 104 in synchronism with the clock signal 103 from the input driver 308 by using the push-pull output driver or the open drain output driver (the bus output control section 201a transmits a data reception completion signal 107b to a micro processing unit (MPU) or the like provided in the slave device 12). The protocol analysis section 202a analyzes the data differential signal to obtain data, and then outputs the data to the bus output control section 201a. The received-data register 203a receives and stores the data from the protocol analysis section 202a, and outputs the data as packet data 108b. The input driver 308 inputs the clock signal 103.

When the packet data 105b to be transmitted is written to the transmission data register 200a, the bus output control section 201a transmits the packet data to the data bus 104 in synchronism with the clock signal 103 output from the output driver 308, by using an arbitrary one of the PP output driver 206a and the OD output driver 207a. Furthermore, the bus output control section 201a outputs an OD output signal to the protocol analysis section 202a in an OD output period. Furthermore, the bus output control section 201a stops transmission of the packet data, when receiving the data differential signal from the protocol analysis section 202a.

The protocol analysis section 202a analyzes the data from the input receiver 204a in synchronism with the clock signal 103. The protocol analysis section 202a identifies the data packet transmitted via the data bus 104, and stores the identified data packet in the received-data register 203a. The stored packet data is sent to the slave device 12 as the packet data 108b.

Furthermore, in the case where the OD output signal is output from the bus output control section 201a, the protocol analysis section 202s outputs, to the bus output control section 201a, a data differential signal indicating the comparison between an assumed signal level of a signal on the data bus 104, which is output from the OD output driver 207a controlled by the bus output control section 201a and the signal level of the signal from the input receiver 204a.

Next, a method of controlling the information processing apparatus of the present invention will be explained.

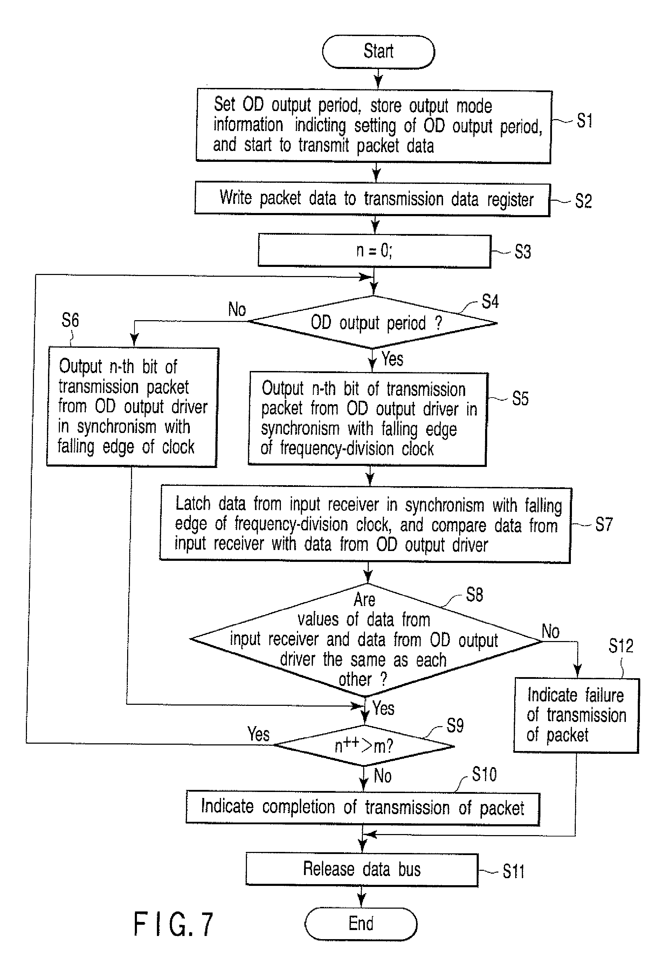

FIG. 7 is a flowchart of the method of controlling the information processing apparatus.

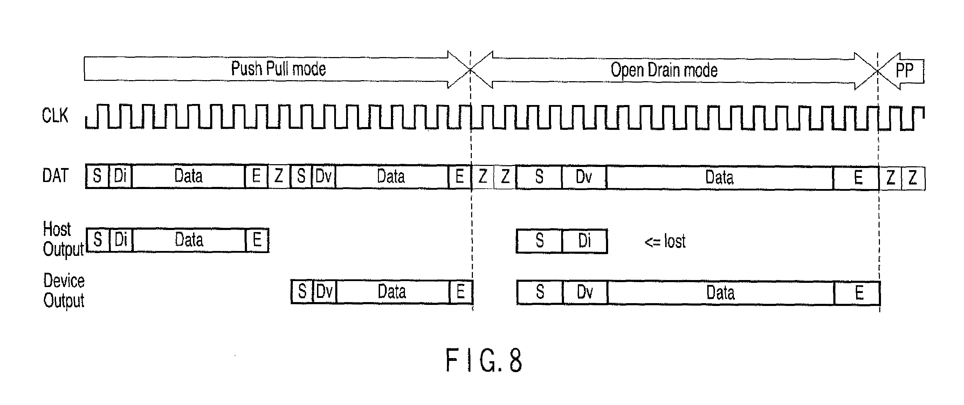

FIG. 8 is a schematic diagram of an example of a protocol for data communication. In FIG. 8, "Push Pull mode", "Open Drain mode", "Host Output", "Device Output", "CLK", "DAT", "S" (S = 0), "Di" (Di = 1), "Dv" (Dv = 0) and "Z" correspond to a PP output period, an OD output period, the output of the host apparatus 10, the output of the slave device 12, the clock signal 103, the data packet, data, a start bit, an end bit, a host ID, a slave ID and control data synchronous with the clock signal, respectively.

The bus output control section 201 sets the OD output period, and stores output mode information indicating setting of the OD output period (step S1 in FIG. 7). Then, the packet data 105a to be transmitted is received by the transmission data register 200 (step S1 in FIG. 7), and is then written to the transmission data register 200 (step S2 in FIG. 7). The bus output control section 201 sets "n" to 0 (step S3 in FIG. 3).

Next, when receiving the packet output instruction signal 106a from the CPU or the like in the host apparatus 10, the bus output control section 201 sends the data reception completion signal 107a to the CPU or the like, and determines whether the output mode at this time is the PP output period (Push Pull mode) or the OD output period (Open Drain mode) (step S4 in FIG. 7). For example, as shown in FIG. 8, the PP output period (Push Pull mode) and the OD output period (Open Drain mode) are set.

It should be noted that switching between the PP output period and the OD output period is effected in accordance with an instruction given by the CPU. To the time of effecting switching between the PP output period and the OD output period, a control signal Z (having a clock frequency double that of the clock signal 103) is applied, which is a frequency-division clock obtained by subjecting the clock signal 103 to frequency division, as a result of which the clock frequency is lowered.

When determining in the step S4 that the above output mode is the OD output period (Yes in the step S4 in FIG. 7) by referring to the set output mode information, the bus output control section 201 outputs an n-th bit of a transmission packet from its OD output driver in synchronism with a falling edge of the frequency-division clock signal obtained by subjecting the clock signal 103 to frequency division (step S5 in FIG. 7).

Next, the protocol analysis section 202 latches the data from the input receiver 204 in synchronism with the falling edge of the frequency-division clock signal, and compares the data from the input receiver 204 and the data from the OD output driver 207 (step S6 in FIG. 7). Then, when determining that the data from the input receiver 204 and that from the OD output driver 207 are the same as each other (Yes in step S8 in FIG. 7), the protocol analysis section 202 determines whether or not "N⁺⁺ > m" is satisfied.

In a step S9, when determining that "N⁺⁺ > m" is not satisfied (No in step S9 in FIG. 7), the protocol analysis section 202 informs the CPU of completion of transmission of the packet to the CPU (i.e., outputs a data differential signal indicating the completion of transmission of the packet to the CPU) via the received-data register 203 (step S10 in FIG. 7), and releases the data bus 104 (step S11 in FIG. 7).

On the other hand, in the step S4, when determining that the above output mode is not the OD output period (No in step S4 in FIG. 7), the bus output control section 201 outputs the n-th bit of the transmission packet from its OD output driver (step S6 in FIG. 7) in synchronism with a falling edge of the clock signal 103, and the step to be carried out proceeds to the step S9.

In the step S8, when determining that the data from the input receiver 204 and that from the OD output driver 207 are not the same as each other (No in step S8 in FIG. 7), the protocol analysis section 202 informs the CPU of failure of transmission of the packet (outputs a data differential signal indicating failure of transmission of the packet to the CPU) via the received-data register 203 (step S12 in FIG. 7), and the step to be carried out is shifted to the step S11. It should be noted that when receiving the data differential signal from the protocol analysis section 202, the bus output control section 201 stops transmission of the packet data.

By virtue of the above feature, the following advantage can be obtained: it can be easily detected that packets are output at the same timing, and preference use of the bus after outputting of the packets at the same timing can be controlled.

The memory card (slave device) can transmit a response packet onto a command line at an arbitrary timing without receiving a command. Furthermore, the command line adopts a method in which a clock frequency obtained by frequency division synchronous with switching of the above output mode (in which a packet is output to the bus) is applied to data transmission as a reference clock frequency in the open drain mode, and the data bus 104 is controlled in the PP output mode, thereby preventing lowering of the speed of data transmission, and achieving the above advantage.

### (Other embodiments)

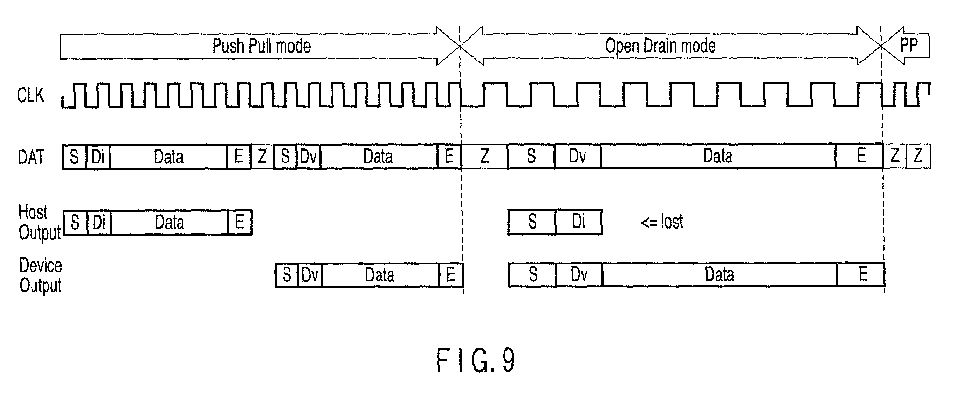

FIG. 9 is a schematic diagram of an example of a protocol for data communication which is carried out in accordance with a bus clock signal the clock frequency of which is appropriately changed when the output period is changed to the OD output period.

In data communication between the host apparatus 10 and the slave device 12, the PP output period and the OD output period are set as in the first embodiment. In the PP output period, the host device 10 transmits packet data onto the data bus in the PP output mode, and the slave device 12 transmits packet data onto the data bus 104 in the PP output mode within a predetermined bus clock cycle.

In the OD output period, when receiving the data differential signal from the protocol analysis section 202 or 202a, the bus output control section 201 of the host apparatus 10 or the bus control section 201a of the slave device 12 stops transmission of the packet data.

However, in the OD output, the higher the frequency, the greater the difficulty with which a sufficient setup hold period is ensured. Thus, the host apparatus 10 appropriately lowers the frequency of the bus clock, so that in the OD output period, data transmission is carried out with the lowered frequency. For example, as shown in FIG. 9, the control signal z is set to have a lower frequency.

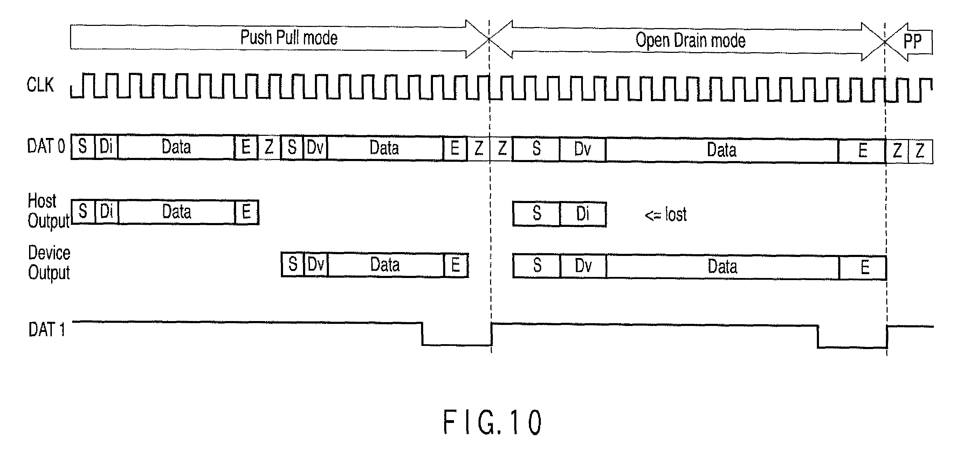

FIG. 10 is a schematic diagram showing the PP output period and the OD output period which are set based on a predetermined signal, for data communication between the host apparatus 10 and the slave device 12.

In the embodiments shown in FIGS. 8 and 9, the PP output period and the OD output period are set based on a data packet protocol. In the embodiment shown in FIG. 10, based on a predetermined signal DAT 1 which is recognizable, the PP output period and the OD output period are set for data communication between the host apparatus 10 and the slave device 12.

The embodiment of FIG. 10 uses a protocol under which it is set that after the slave device 12 outputs a response data packet for a data packet from the host device 10 in the PP output period, the output period changes from the PP output period to the OD output period, and after the slave device 12 outputs a data packet in the OD output period, the output mode changes from the OD output period to the PP output period. In this embodiment also, the same advantage can be obtained as in the first embodiment.

Moreover, the above embodiments can be applied to all a plurality of data lines synchronous with a single clock signal or some of these data lines. In addition, an open collector output can be used in place of the above OD output.

## Claims

1. An information processing apparatus (10) capable of transmitting a packet to a slave device (12) through a bus (104), and receiving a packet output from the slave device (12) through the bus (104), in synchronism with a clock, the information processing apparatus (10) **characterized by** comprising:
a memory device (11) which sets, in a case where the information processing apparatus (10) transmits the packet to the slave device (12), and receive the packet output from the slave device (12), a start timing of an open drain output period in which communication is carried out in an open drain mode, and stores data indicating the start timing of the open drain output period, the open drain mode output period being set as an output mode in which each of the packets is output to the bus (104); and
a switching device (11) which switches the output mode to the open drain mode, at the start timing of the open drain output period, which is indicated by the data stored in the memory device (11), after the information processing apparatus (10) starts to transmit the packet to the slave device (12), and receive the packet output from the slave device (12).

2. The information processing apparatus (10) according to claim 1, **characterized in that** the open drain output period is a protocol period in which the information processing apparatus (10) transmits the packet to the slave device (12), and receives the packet output from the slave device (12), at the same timing.

3. The information processing apparatus (10) according to claim 1, **characterized in that** in a case where the switching device (11) switches the output mode to the open drain mode, a clock frequency applied to the communication is set to a predetermined clock frequency in synchronism with switching of the output mode to the open drain mode.

4. The information processing apparatus (10) according to claim 1, **characterized in that** in the case where a frequency-division clock frequency is obtained by subjecting the clock frequency to frequency division in synchronism with switching of the output mode to the open drain mode, and the communication is carried out in the open drain output mode, the information processing apparatus (10) transmits the packet to the slave device (12), and receives the packet output from the slave device (12), in accordance with a reference clock having the frequency-division clock frequency.

5. The information processing apparatus (10) according to claim 1, which further comprises a control device (11) which detects a difference between a level of a signal output to the bus and that of a signal to be output to the bus (104), when the information processing apparatus (10) transmits the packet to the slave device (12), and receives the packet output from the slave device (12), at the same timing, during the communication carried out in the open drain mode, and which sets preferential use information regarding preferential use of the bus, based on signal level difference information regarding the detected difference.

6. The information processing apparatus (10) according to claim 5, **characterized in that** the preferential use information is information in accordance with which at least one of the slave device (12) and the information processing apparatus (10) preferentially transmits at least an associated one of the packets.

7. The information processing apparatus (10) according to claim 5, **characterized in that** the preferential use information is information in accordance with which at least one of the slave device (12) and the information processing apparatus (10) retransmits at least an associated one of the packets.

8. The information processing apparatus (10) according to claim 5, **characterized in that** the signal level difference information is information in accordance with which at least one of the slave information and the information processing apparatus (10) stops transmission of at least an associated one of the packets, upon reception of the information.

9. The information processing apparatus (10) according to claim 1, **characterized in that** the slave device (12) is removably set in the information processing apparatus (10).

10. The information processing apparatus (10) according to claim 9, **characterized in that** the slave device (12) is a memory card.

11. A method of controlling an information processing apparatus (10) capable of transmitting a packet to a slave device (12) through a bus, and receiving a packet output from the slave device (12) through the bus, in synchronism with a clock, the method **characterized by** comprising:
setting, in a case where the information processing apparatus (10) transmit the packet to the slave device (12), and receives the packet output from the slave device (12), a start timing of an open drain output period in which communication is carried out in an open drain mode, and then storing data indicating the start timing of the open drain output period, in a memory device; and
switching the output mode to the open drain mode at the start timing of the open drain output period, which is indicated by the data stored in the memory device, after the information processing apparatus (10) starts to transmit the packet to the slave device (12), and receive the packet output from the slave device (12).
